# FASCICULE DE BREVET EUROPEEN

(11) **EP 0 969 161 B1**
(45) Date de publication et mention de la délivrance du brevet: **24.08.2005**
(21) Numéro de dépôt: 99810491.3
(22) Date de dépôt: 04.06.1999
(51) Int. Cl.: E04F 10/06, E06B 9/68

(54) **Store motorisé avec automatisme de sécurité**
Vorhang mit motorisierter Aufwickelvorrichtung mit einer automatischen Sicherheitsvorrichtung
Blind with motorised winding device with an automatic safety device

(30) Priorité: 01.07.1998 FR 9808381
(43) Date de publication de la demande: 05.01.2000
(73) Titulaire: Somfy SAS, 74300 Cluses (FR)
(72) Inventeur: Vignoli, Jean-Marc Nicolas, 74570 Thorens-Glieres (FR)
(74) Mandataire: Meylan, Robert Maurice

(56) Documents cités:
- DE-A- 4 009 373
- DE-A- 4 407 342
- US-A- 4 625 565

## Description

La présente invention concerne un store, en particulier un store à bras de soutien, dont la toile est déroulable d'un tube ou arbre d'enroulement entraîné par un moteur électrique et dans lequel sont prévus des moyens de mesure du couple moteur délivrant une grandeur représentative de la force de vent agissant sur la toile du store.

Un tel store est connu de la demande de brevet DE 44 07 342. Le carter tubulaire du moteur, monté à l'intérieur d'un tube d'enroulement, est fixé sur une barre rigide par l'intermédiaire d'un manchon en matière plastique qui autorise une certaine rotation du carter du moteur autour de son support lorsqu'un couple suffisant est appliqué sur ce carter. Le carter est muni intérieurement de deux butées entre lesquelles est engagée une barre travaillant en flexion et sur laquelle est fixée une jauge de contrainte délivrant une tension représentative du couple. Lorsque les contraintes élevées sont exercées par le vent sur la toile du store déployée, le carter du moteur est entraîné en rotation. Ses butées viennent exercer un effort de flexion sur la barre portant la jauge de contrainte reliée au dispositif de commande du moteur du store. Dès que la flexion de la barre de détection atteint un certain seuil, dans un sens ou dans l'autre, l'enroulement du store est commandé. L'arrêt du store dans des positions intermédiaires est obtenu au moyen de capteurs de position placés à l'extérieur.

De la demande de brevet EP 0 822 316, il est par ailleurs connu de détecter un déplacement angulaire prédéterminé du carter d'un moteur retenu en rotation par un ressort, au moyen de capteurs optiques afin de couper l'alimentation du moteur lorsque le produit entraîné par le moteur arrive en butée en fin de course. Ce dispositif ne fournit donc que des valeurs discrètes qui sont déterminées par la position des capteurs optiques. Un nouveau réglage nécessite une intervention dans le moteur pour déplacer les capteurs optiques.

Il est par ailleurs connu, par exemple du brevet DE 40 09 373, de mesurer la force du vent au moyen d'un anémomètre. Non seulement cette solution nécessite le montage d'un anémomètre en un point adéquat du bâtiment, un câblage correspondant ou une liaison sans fil par émetteur et récepteur, mais l'information obtenue ne correspondra généralement pas aux contraintes réellement subies par la toile du store, les conditions de vent étant différentes au niveau du store et à celui de l'anémomètre. En outre, une hélice d'anémomètre peut se gripper ou être carrément bloquée par la glace.

Des positions intermédiaires de déploiement de la toile du store sont souhaitées de manière à ne pas annihiler totalement l'effet de protection solaire du store en cas de vent de force moyenne ne permettant pas de maintenir la toile totalement déployée, mais permettant à une toile partiellement déployée de supporter les contraintes exercées par le vent.

La présente invention a pour but de réaliser un store motorisé répondant aux souhaits susmentionnés.

A cet effet, le store selon l'invention est caractérisé en ce que les moyens de mesure du couple sont associés à une unité logique de traitement dans laquelle sont enregistrées trois valeurs de couple, soit une première valeur dite de danger, une deuxième valeur dite de sécurité et une troisième valeur dite de tout-va-bien, cette ULT étant programmée de telle manière que, le store étant à l'arrêt et au moins partiellement déroulé, si le couple dépasse la valeur de danger, l'ULT commande l'enroulement de la toile jusqu'à ce que le couple passe au dessous de la valeur de sécurité, et que si le couple descend au-dessous de la valeur tout-va-bien, l'ULT commande le déroulement de la toile tant que le couple ne refranchit pas la valeur de sécurité, et, le store étant enroulé, l'ULT autorise le déroulement de la toile aussi longtemps que le couple ne franchit pas la valeur de sécurité.

Ainsi, si le vent n'est pas très fort, mais que la toile est totalement déployée et que le seuil danger est dépassé, la toile se réenroulera partiellement jusqu'au franchissement du seuil de sécurité et pourra encore assurer partiellement au moins sa fonction de protection solaire. Dès que le vent faiblit suffisamment ou cesse, le seuil de tout-va-bien est franchi vers le bas et la toile peut se redéployer davantage jusqu'à ce que l'on atteigne ou non le seuil de sécurité. En l'absence de vent, le déploiement est total sans atteindre ce seuil de sécurité.

L'arrêt du déploiement du store n'est pas déterminé par des capteurs intermédiaires, mais uniquement par les valeurs de couple enregistrées dans l'ULT. Ces valeurs de couple peuvent être modifiées aisément et adaptées à chaque dimension et genre de toile.

Plus la toile du store sera secouée par le vent, plus le couple mesuré sera grand.

La mesure du couple fournit donc une très bonne indication sur les contraintes subies par la toile du store.

L'algorithme utilisé se distingue en outre par sa grande simplicité.

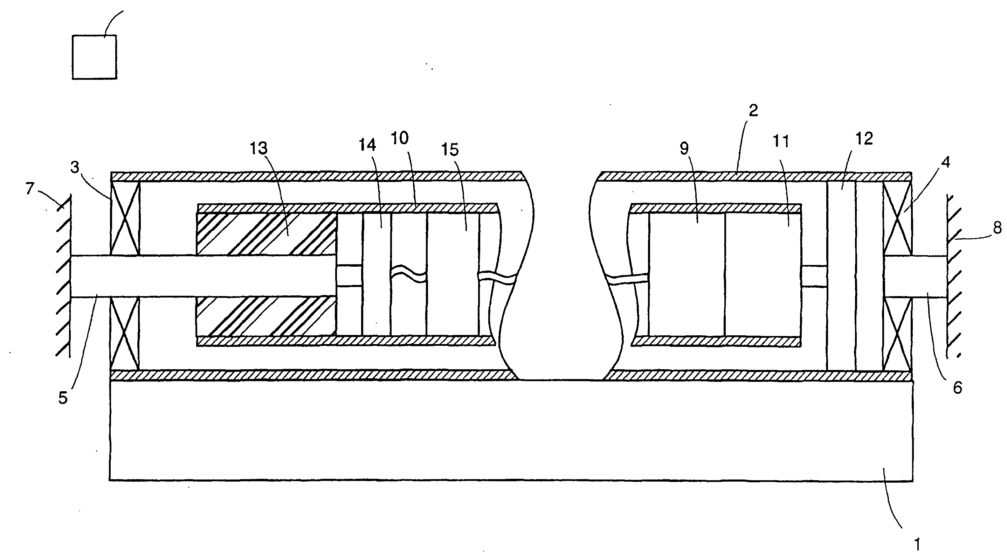

Le dessin annexé représente, à titre d'exemple, un mode d'exécution de l'invention.

L'unique figure du dessin est une vue en coupe axiale, partiellement schématique, d'un tube d'enroulement de store.

Une toile 1 est enroulable et déroulable sur un tube d'enroulement 2 muni à ses extrémités de deux flasques 3 et 4 montés rotativement sur deux paliers 5 et 6 fixés sur des supports 7 et 8. A l'intérieur du tube d'enroulement, est monté, de manière bien connue, un moteur électrique 9 monté dans un carter tubulaire 10 et associé à un réducteur 11 dont l'arbre de sortie entraîne une roue dentée 12 entraînant le tube d'enroulement 2 en rotation par l'intermédiaire d'une couronne dentée intérieure que présente ce tube d'enroulement. A l'extrémité opposée à la roue dentée 12, le carter tubulaire 10 du moteur est supporté par le palier 5 par l'intermédiaire d'une liaison élastique 13, par exemple en matière synthétique. Dans le prolongement du palier 5 est fixé un capteur magnétique de position à sonde de HALL 14, tel que décrit dans le brevet EP 0665 416.

Le stator de ce capteur est fixé au palier 5, tandis que sa culasse tubulaire est solidaire en rotation du carter 10.

La sonde de HALL du capteur 14 est reliée à un circuit de commande 15 lui-même relié électriquement au moteur 9. Le dispositif de commande 15 comprend une ULT (unité logique de traitement) dans laquelle sont enregistrées trois valeurs de déplacement angulaire du capteur 14, à savoir une valeur dite de danger, une valeur de sécurité et une valeur dite de tout-va-bien, la valeur de tout-va-bien étant bien entendue inférieure à la valeur de sécurité elle-même inférieure à la valeur danger. L'ULT est en outre programmée de telle manière que si le déplacement angulaire dépasse la valeur danger, l'ULT commande l'enroulement de la toile jusqu'à ce que le déplacement angulaire passe en dessous de la valeur sécurité et de telle manière que si le déplacement angulaire descend au dessous de la valeur tout-va-bien, l'ULT autorise le déroulement de la toile tant que le déplacement angulaire ne franchit pas la valeur de sécurité.

Il serait bien entendu possible d'utiliser un capteur de déplacement angulaire de type différent ou tout autre moyen de mesure du couple.

## Revendications

1. Store, en particulier store à bras de soutien, dont la toile (1) est déroulable d'un tube ou arbre d'enroulement (2) entraîné par un moteur électrique (9) et dans lequel sont prévus des moyens de mesure du couple délivrant une grandeur représentative de la force du vent agissant sur la toile du store, les moyens de mesure du couple étant associés à une unité logique de traitement (15), **caractérisé en ce que** dans ladite unité logique de traitement sont enregistrées trois valeurs de couple, soit une première valeur dite de danger, une deuxième valeur dite de sécurité et une troisième valeur dite de tout-va-bien, cette unité logique de traitement étant programmée de telle manière que, le store étant à l'arrêt et au moins partiellement déroulé, si le couple dépasse la valeur de danger, l'unité logique de traitement commande l'enroulement de la toile jusqu'à ce que le couple passe au dessous de la valeur de sécurité, et que si le couple descend au-dessous de la valeur tout-va-bien, l'unité logique de traitement commande le déroulement de la toile tant que le couple ne refranchit pas la valeur de sécurité, et, le store étant enroulé, l'unité logique de traitement autorise le déroulement de la toile aussi longtemps que le couple ne franchit pas la valeur de sécurité.

2. Store selon la revendication 1, **caractérisé en ce que** les moyens de mesure du couple sont des moyens de mesure du couple moteur.

3. Store selon l'une des revendications précédentes, **caractérisé en ce que** les moyens de mesure du couple comprennent un capteur de déplacement angulaire.

## Patentansprüche

1. Markise oder Rollvorhang, insbesondere ausstellbare Markise oder ausstellbarer Rollvorhang, deren Markisen- tuch bzw. dessen Vorhangtuch (1) von einem Aufrollrohr oder einer Aufrollwelle (2) abrollbar ist, welches bzw. welche von einem elektrischen Motor (9) angetrieben wird und Mittel zum Messen des Motormoments aufweist, wobei diese Mittel eine für die auf das Markisen- bzw. Vorhangtuch wirkende Windkraft repräsentative Grösse liefern und einer logischen Verarbeitungseinheit (15) zugeordnet sind, **dadurch gekennzeichnet, dass** in der erwähnte logische Verarbeitungseinheit drei Momentwerte gespeichert sind, und zwar ein erster sogenannter Gefahrenwert, ein zweiter sogenannter Sicherheitswert und ein dritter sogenannter Alles-ist-gut-Wert, dass diese logische Verarbeitungseinheit so programmiert ist, dass sie, wenn das Moment bei teilweise abgerollter Stellung der Markise oder des Rollvorhang den Gefahrenwert übersteigt, das Aufrollen des Markisen- bzw. Vorhangtuchs solange steuert, bis das Moment unter den Sicherheitswert abfällt, und dass bei einem Abfallen des Moments unter den Alles-ist-gut-Wert die logische Verarbeitungseinheit das Abrollen des Markisen- bzw. Vorhangtuchs steuert, solange das Moment den Sicherheitswert nicht wieder übersteigt.

2. Markise oder Rollvorhang, insbesondere ausstellbare Markise oder ausstellbarer Rollvorhang, deren Markisen- tuch bzw. dessen Vorhangtuch (1) von einem Aufrollrohr oder einer Aufrollwelle (2) abrollbar ist, welches bzw. welche von einem elektrischen Motor (9) angetrieben wird und Mittel zum Messen des Motormoments aufweist, wobei diese Mittel eine für die auf das Markisen- bzw. Vorhangtuch wirkende Windkraft repräsentative Grösse liefern und einer logischen Verarbeitungseinheit (15) zugeordnet sind, **dadurch gekennzeichnet, dass** in der erwähnte logische Verarbeitungseinheit drei Momentwerte gespeichert sind, und zwar ein erster sogenannter Gefahrenwert, ein zweiter sogenannter Sicherheitswert und ein dritter sogenannter Alles-ist-gut-Wert, dass diese logische Verarbeitungseinheit so programmiert ist, dass sie, wenn das Moment bei Stillstand und teilweise abgerollter Stellung der Markise oder des Rollvorhang den Gefahrenwert übersteigt, das Aufrollen des Markisen- bzw. Vorhangtuchs solange steuert, bis das Moment unter den Sicherheitswert abfällt, und dass bei einem Abfallen des Moments unter den Alles-ist-gut-Wert die logische Verarbeitungseinheit das Abrollen des Markisen- bzw. Vorhangtuchs steuert, solange das Moment den Sicherheitswert nicht wieder übersteigt.

3. Markise oder Rollvorhang nach Anspruch 1 oder 2, **dadurch gekennzeichnet, dass** die logische Verarbeitungseinheit so programmiert ist, dass sie, wenn die Markise oder der Rollvorhang aufgerollt ist, das Abrollen des Markisen- bzw. Vorhangtuchs so lange erlaubt, wie das Moment nicht den Sicherheitswert übersteigt.

## Claims

1. An awning, in particular an awning with a supporting arm, the cloth (1) of which can be unwound from a tube or a winding shaft (2) driven by an electric motor (9) and in which are provided means for measuring the drive torque which supply a variable representing the windforce acting on the awning cloth, the torque measuring means being associated with a logical processing unit (15), **characterised in that** in the logical processing unit (15) are recorded three torque values, namely a first so-called danger value, a second so-called safety value and a third so-called all-clear value, this logical processing unit being programmed in such a way that, with the awning at least partially unwound, if the torque exceeds the danger value, the logical processing unit activates the winding of the cloth, until the torque falls below the safety value and in such a way that, if the torque falls below the all-clear value, the logical processing unit activates the unwinding of the cloth as long as the torque does not pass the safety value again.

2. An awning, in particular an awning with a supporting arm, the cloth (1) of which can be unwound from a tube or a winding shaft (2) driven by an electric motor (9) and in which are provided means for measuring the drive torque which supply a variable representing the windforce acting on the awning cloth, the torque measuring means being associated with a logical processing unit (15), **characterised in that** in the logical processing unit (15) are recorded three torque values, namely a first so-called danger value, a second so-called safety value and a third so-called all-clear value, this logical processing unit being programmed in such a way that, with the awning stopped and at least partially unwound, if the torque exceeds the danger value, the logical processing unit activates the winding of the cloth, until the torque falls below the safety value and in such a way that, if the torque falls below the all-clear value, the logical processing unit activates the unwinding of the cloth as long as the torque does not pass the safety value again.

3. An awning according to claim 1 or 2, **characterised in that**, with the awning wound up, the logical processing unit allows the cloth to be unwound for as long as the torque does not pass the safety value.
